# EUROPÄISCHE PATENTSCHRIFT

(11) **EP 1 952 039 B1**
(45) Veröffentlichungstag und Bekanntmachung des Hinweises auf die Patenterteilung: **27.01.2010**
(21) Anmeldenummer: 06819239.2
(22) Anmeldetag: 03.11.2006
(51) Int. Cl.: F16D 23/14

(54) **AUSRÜCKLAGERSYSTEM**
ABUTMENT SYSTEM
SYSTEME DE BUTEE DE DEBRAYAGE

(30) Priorität: 17.11.2005 DE 102005054748
(43) Veröffentlichungstag der Anmeldung: 06.08.2008
(73) Patentinhaber: Schaeffler KG, 91074 Herzogenaurach (DE)
(72) Erfinder: WINKELMANN, Ludwig, 91056 Erlangen (DE); DITTMER, Steffen, 91086 Münchaurach (DE)
(86) Internationale Anmeldenummer: PCT/EP2006/068068
(87) Internationale Veröffentlichungsnummer: WO 2007/057307

(56) Entgegenhaltungen:
- DE-A1- 10 356 236
- DE-A1- 19 700 930
- FR-A1- 2 851 023

## Beschreibung

### Gebiet der Erfindung

Die Erfindung betrifft ein Ausrücklagersystem mit wenigstens einem Ausrücklager, mit zumindest einer Führungshülse und mit mindestens einem ortsfesten Führungsrohr, wobei die längsverschiebbare Führungshülse an dem Führungsrohr entlang der Längsmittelachse des Ausrücklagersystems geführt ist und dabei an einem durch die Führungshülse verschiebbaren Lagerring des Ausrücklagers so anliegt, dass das Ausrücklager mittels des Lagerringes axial beweglich ist.

### Hintergrund der Erfindung

Eine derartiges Ausrücklagersystem ist in DE 103 56 236 A1 näher beschrieben. Mechanische Schaltkupplungen und deren Betätigungseinrichtungen in modernen Antriebseinheiten müssen so wenig wie möglich Bauraum für sich beanspruchen. Extrem axial kurze Bauweise von derartigen Kupplungen ist insbesondere bei Betätigungseinrichtungen von Parallelschaltgetrieben gefordert. Demzufolge dürfen auch die Ausrücklager nur so wenig wie möglich axial Bauraum für sich beanspruchen. Die Führungshülsen sind in dem Führungsrohr/Gehäuse mit Radialspiel geführt um axial beweglich zu sein. Aufgrund der kurzen axialen Bauweise und relativ großer Führungsdurchmesser neigt die Führungshülse bei Aus- und Einrücken zum Verkippen und somit zum Verklemmen in der Führung.

Das Verkippen kann durch Verringerung des Radialspiels eingeschränkt werden. Diese Maßnahme lässt sich jedoch nicht in jedem Fall und auch nicht in ausreichendem Maße verwirklichten. Im Radialspiel sind einerseits die möglichen durch Fertigung und Montage bedingten Maßabweichungen vom idealen sollmaß und andererseits die Umgebungseinflüsse wie Temperatur und deren Folgen zu berücksichtigen. Häufig werden in derartigen Führungen Paarungen aus Kunststoff mit Metallen eingesetzt. So ist die Führungshülse oder das Führungsrohr/Gehäuse oft aus Kunststoff und der Partner, das Führungsrohr oder die Führungshülse aus Metall, so dass bei der Wahl des Radialspiels auch die unterschiedlichen Wärmedehnungskoeffizienten der Werkstoffe und die daraus resultierenden unterschiedlichen Wärmedehnungen zu beachten sind. Bei zu kleinen Spielpassungen im Schiebesitz klemmt derSchiebesitz zwischen Führungshülse und Führungsrohr aufgrund unterschiedlichen Wärmedehnungen.

Aus DE 197 00 930 A1 ist eine Ausrückvorrichtung bekannt, die mittels Bewegungsbegrenzungsmitteln einerseits eine leichte Montage der Vorrichtung erzielt und andererseits die Beweglichkeit der Ausrückvorrichtung nicht beeinträchtigt. Dazu wird vorgeschlagen eine axiale Fixierung des Führungsrohres im Lagerträger im Sinne eines Bajonettverschlusses oder einer Rastvorrichtung umzusetzen.

### Zusammenfassung der Erfindung

Die Aufgabe der Erfindung ist es daher, die Führungsverhältnisse in Ausrücklagersystemen der gattungsbildenden Art zu verbessern.

Diese Aufgabe ist nach dem Gegenstand des Anspruches 1 und weiterer abhängiger Ansprüche gelöst.

Das Ausrücklagersystem weist wenigstens eine Längsführung auf. Die Längsführung ist zwischen der Führungshülse und dem Führungsrohr aus zumindest einer längs gerichtet verlaufenden und deshalb zu der Längsmittelachse parallel ausgerichteten Führungsnut und aus einem radial die Führungsnut eingreifenden Führungsvorsprung gebildet. Der Führungsvorsprung in der Führungsnut und die Führungsnut sind relativ zueinander axial verschiebbar. Die Führung ist von dem Verschiebesitz, mit dem die Führungshülse und das Führungsrohr ineinander angeordnet sind, soweit getrennt, dass die Längsführung von den Radialspielen in der Längsführung nicht beeinflusst ist.

Die Führung der Führungshülse zum Führungsrohr ist, ähnlich wie bei Vielwellen, über eine Kombination von radial nach innen oder nach außen gerichtet-vertieften Führungsnuten und Vorsprüngen/Keilen gebildet. Diese ineinander greifenden Profile sind außerhalb der eigentlichen ursprünglichen Führungsdurchmesser der Führungshülse und des Führungsrohrs angeordnet. Die eigentliche Führung der Führungshülse zum Führungsrohr wird durch die erfindungsgemäße Längsführung und nicht mehr an den ursprünglichen Führungsdurchmessern vorgenommen. Eine klemmfreie Führung ist durch die tangential schmal ausgeführte und auf die Längsmittelachse bezogene Führung erreicht.

Unter Führungsrohr sind alle geeigneten Arten von Gehäusen oder zum Gehäuse der Kupplung oder des Fahrzeugs ortsfesten und somit relativ zum Ausrücklager nicht axial verschiebbaren rohrförmigen Aufnahmen mit zylindrischem oder anders gestaltetem Querschnitt zu verstehen, die geeigneten sind, die in der Gestalt mit dem Führungsrohr korrespondierende Führungshülse innen oder außen aufzunehmen. Dabei kann das Führungsrohr oder die Führungshülse die Führungsvorsprünge aufweisen. Die Führungsvorsprünge sind dann wahlweise radial nach innen oder nach außen gerichtet und greifen in entsprechend korrespondierende Führungsnuten an der Führungshülse oder an dem Führungsrohr ein.

Eine Ausgestaltung der Erfindung sieht vor, dass eine oder mehrere Führungsnuten an dem Führungsrohr oder an der Führungshülse ausgebildet sind, und dass die Führungshülse oder das Führungsrohr einen oder mehrere Führungsvorsprünge aufweist. Wenn die Führungsvorsprünge radial nach außen gerichtet sind ist Führungsnut radial nach innen zur Längsmittelachse des Ausrücklagersystems hin offen. Wenn die Führungsvorsprünge radial nach innen gerichtet sind ist die Führungsnut radial nach außen hin offen.

Die Führungsvorsprünge sind wahlweise von der Führungshülse/Führungsrohr weg radial nach innen oder nach außen gerichtet, am Umfang verteilt und/oder in Längsrichtung axial nebeneinander oder versetzt zueinander angeordnet und greifen in entsprechend korrespondierende Führungsnuten an dem Führungsrohr bzw. an der Führungshülse ein.

Die Führungshülse ist in einem Fall in dem Führungsrohr angeordnet - in anderen Fällen ist das Führungsrohr in der Führungshülse angeordnet..

Weitere Ausgestaltungen der Erfindung sehen vor, dass die Führungshülse oder das Führungsrohr und der Führungsvorsprung einteilig miteinander ausgebildet sind oder dass die Führungsvorsprünge an der Führungshülse oder dem Führungsrohr befestigt sind. So ergeben sich vielfältige und kostengünstige Möglichkeiten hinsichtlich der Wahl des Materials und der Paarung von Material, Hinsichtlich der Herstellungsmethoden und der Methoden zur Montage.

Eine weitere Ausgestaltung der Erfindung sieht vor, dass die Führungshülse und das Führungsrohr konzentrisch ineinander zu einem Schiebesitz angeordnet sind. Dabei ist zwischen dem Führungsrohr und der Führungshülse ein Radialspiel ausgebildet. Das Radialspiel ist größer als ein tangential gerichtetes Führungsspiel in der Längsführung zwischen der Führungsnut und dem Führungsvorsprung. Das Führungsrohr ist an den Führungsvorsprüngen enger in der Führungsnut geführt, als das Führungsrohr an seinem Innendurchmesser auf der Welle oder an seinem Außendurchmesser zu dem Führungsrohr. Ein Verklemmen im Schiebesitz durch Verkippen oder durch unterschiedliche Wärmedehnung der gegeneinander verschiebbaren Hülsen/Rohre ist somit verhindert

Eine weitere Ausgestaltung der Erfindung sieht vor, dass die Führungsvorsprünge parallel zueinander ausgerichtete Führungsflanken aufweisen. Jede dieser Führungsflanken liegt einer der Innenflanken an der Führungsnut parallel gegenüber. Das Führungsspiel in der Längsführung ist in der Führungsnut zwischen den Flanken ausgebildet. Zwischen dem radial nach außen gewandten freien Ende des Führungsvorsprungs und dem radial nach innen gerichteten Nutgrund der Führungsnut ist ein relativ großes Radialspiel ausgebildet. Das Radialspiel ist mindestens so groß, dass unterschiedliche Wärmeausdehnungskoeffizienten der Werkstoffe der miteinander gepaarten Bauelemente berücksichtigt sind. Ein ungehindertes Ausdehnen bzw. Schrumpfen ist insbesondere in einer Anordnung mit den zuvor erwähnten parallelen Flanken möglich. Das Verkippen und eventuell daraus entstehendes Verkippen ist verhindert.

Das Gleitverhalten der Führungsvorsprünge kann verbessert werden, wenn mindestens eines der Elemente der Paarung in Gleitkontaktbereichen, insbesondere in der Längsführung, mit geeigneten Gleitbeschichtungen versehen ist.

### Beschreibung der Zeichnung

Die Erfindung wird nachfolgend anhand von Ausführungsbeispielen näher erläutert.

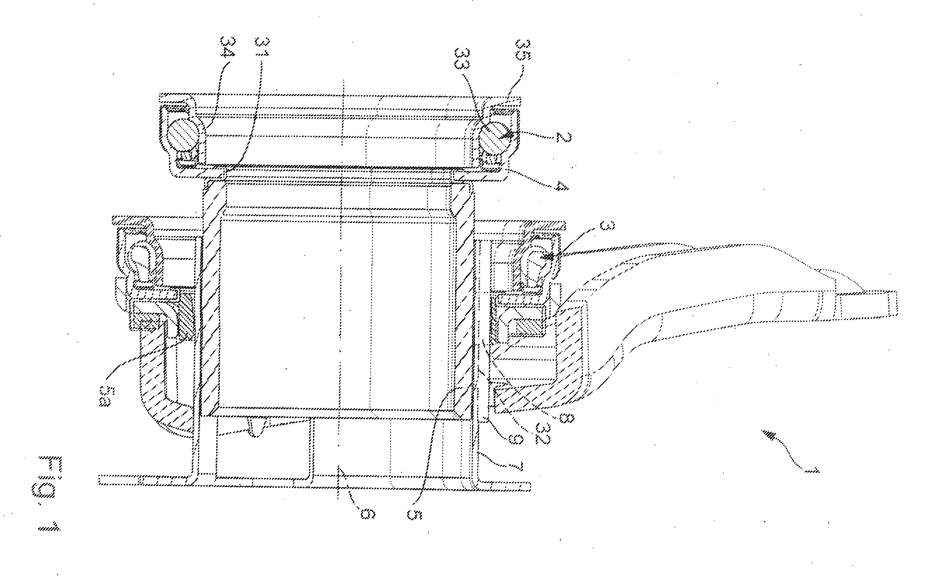

Figur 1 zeigt ein Ausrücklagersystem 1 mit zwei Ausrücklagern 2 und 3. Der Außenring 4 des Ausrücklagers 2 ist im Kontakt mit einer Führungshülse 5. Die Führungshülse 5 sitzt längs entlang der Längsmittelachse 6 verschiebbar in einem gehäusefesten Führungsrohr 7. Die Führungshülse 5 aus Kunststoff ist relativ zu dem Durchmessern des Ausrücklagers lang ausgebildet und deshalb ausreichend in dem Führungsrohr 7 geführt. Die Verschiebbarkeit ist durch ein Radialspiel in dem Schiebesitz zwischen Führungsrohr 7 und der Führungshülse 5 gewährleistet.

Die Führungshülse 5 wirkt so auf den Außenring 4, dass das Ausrücklager 2 um den Betätigungsweg in der nicht weiter dargestellten Kupplung axial entlang der Längsmittelachse 6 verschiebbar ist. Die Ausrückkräfte zum Ausrücken der Kupplung werden über die Wälzkörper 33 auf den Innenring 34 und von der Stirnseite 35 des Innenrings 34 auf die nicht dargestellte Federteller der Kupplung übertragen. Stirnseitig der Führungshülse 5 ist ein Stützelement 31 ausgebildet, über das sich der Außenring 4 an dem Kunststoffteil abstützt und über welches das Ausrücklager 2 axial mit der Führungshülse 5 mitgenommen wird. Das Stützelement ist zum Beispiel ein Ring aus Blech mit einem Profil, das im Längsschnitt betrachtet hakenförmig gebördelt ist. Es gibt auch Anordnungen, bei denen die Führungshülse auf den Innenring des Ausrücklagers wirkt und die Ausrückkräfte über die Wälzkörper auf den Außenring und von dort auf die Feder der Kupplung übertragen werden.

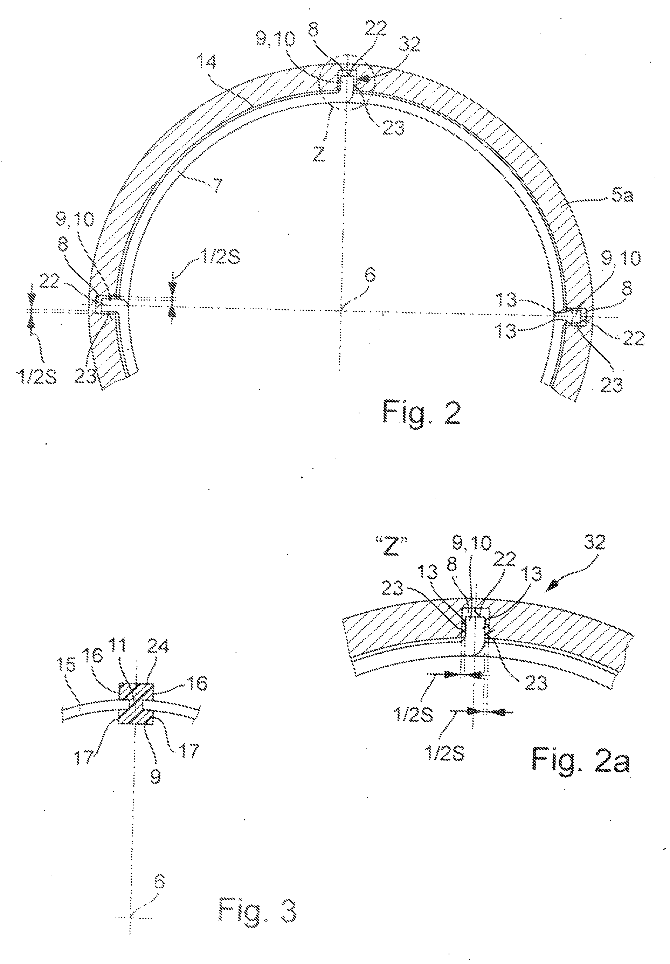

Dem Ausrücklager 3 ist eine Führungshülse 5a zugeordnet. Die Führungshülse ist in diesem Fall aus Kunststoff, kann aber auch aus Nichteisenmetall oder Blech sein. Zwischen dem Führungsrohr 7 und der Führungshülse 5a sind mindestens drei Längsführungen 32 ausgebildet, von denen eine in dem Längsschnitt nach Figur 1 dargestellt ist. Die anderen Längsführungen 32 sind an anderen nicht mit dem Längsschnitt erfassten Positionen des Umfangs angeordnet. Aus Figur 1 und Figur 2 ist ersichtlich, dass die Führungshülse 5a längs gerichtet verlaufende und deshalb zu der Längsmittelachse 6 parallel ausgerichtete Führungsnuten 8 aufweist. Die Führungsnuten 8 sind radial von innen nach außen vertieft. Die Führungsrohr 7 weist radial nach außen abstehende Führungsvorsprünge 9 auf. Jeder Führungsvorsprung 9 greift in eine der Führungsnuten 8 ein.

In dem Beispiel nach Figur 2 ist das Führungsrohr 7 aus Blech mit Führungsvorsprüngen 9, die als Laschen 10 radial hervorstehen. Die Laschen 10 sind aus einem entsprechend ausgesparten Abschnitt des Bleches des Führungsrohrs 7 radial nach außen gebogen. Jeder der Führungsvorsprünge 9 greift radial in eine der Führungsnuten 8 ein. Da die Führungsvorsprünge 9 längs gleich mit den Führungsnuten 8 ausgerichtet sind, ist das Führungsrohr 7 mit den Führungsvorsprüngen 9 in der Führungshülse 5a mindestens um den Betätigungsweg des Ausrücklagers 2 längs (in der Darstellung nach Figur 2 senkrecht zur Darstellungsebene) verschiebbar.

Figur 2a zeigt das Detail Z aus Figur 2 in vergrößerter und nicht maßstäblich Darstellung. Die Innenflanken 13 der Führungsnuten 9 sind parallel zueinander ausgerichtet und liegen einander tangential zur gedachten Außenumfangslinie 14 der Führungshülse 5a gegenüber. Das tangentiale Führungsspiel S zwischen den jeweiligen Innenflanken 13 und den Führungsflanken 23 an den Führungsvorsprüngen 9 ist sehr gering und kleiner als das Radialspiel des Schiebesitzes zwischen Führungshülse 5a und Führungsrohr 7. Zwischen einer tangential und längs ausgerichteten ebenen Führungsfläche 22 ist radial entweder ebenfalls das Führungsspiel S ausgebildet oder das Spiel ist wesentlich größer als S, so dass sich die Elemente bei unterschiedlichen Wärmeausdehnungskoeffizienten ungehindert radial ausdehnen können.

Es ist auch denkbar, dass derartige Führungsflanken 23 oder Führungsflächen 22 in den nach Figur 2 und der folgenden Figuren betrachteten Querschnitten innen ballig oder außen ballig ausgebildet sind oder ebenflächig aber geneigt zueinander sind.

Figur 3 zeigt eine alternative Gestaltung eines Führungsrohrs 15 an einem Ausschnitt. Das Führungsrohr 15 ist mehrteilig aus dem Führungsrohr an sich und aus Längsrippen 11 zusammengesetzt. Die Längsrippen 11 aus Kunststoff sind in das Führungsrohr aus Blech eingeschnappt, eingepresst oder eingespritzt. Das Führungsrohr 15 ist außen- oder/und innen über die Flanken 16 oder/und 17 und nicht über die radial nach außen gerichtete, sich tangential und sich längs erstreckende Fläche 24 beispielsweise in den Führungsnuten 8 einer Führungshülse 5a geführt.

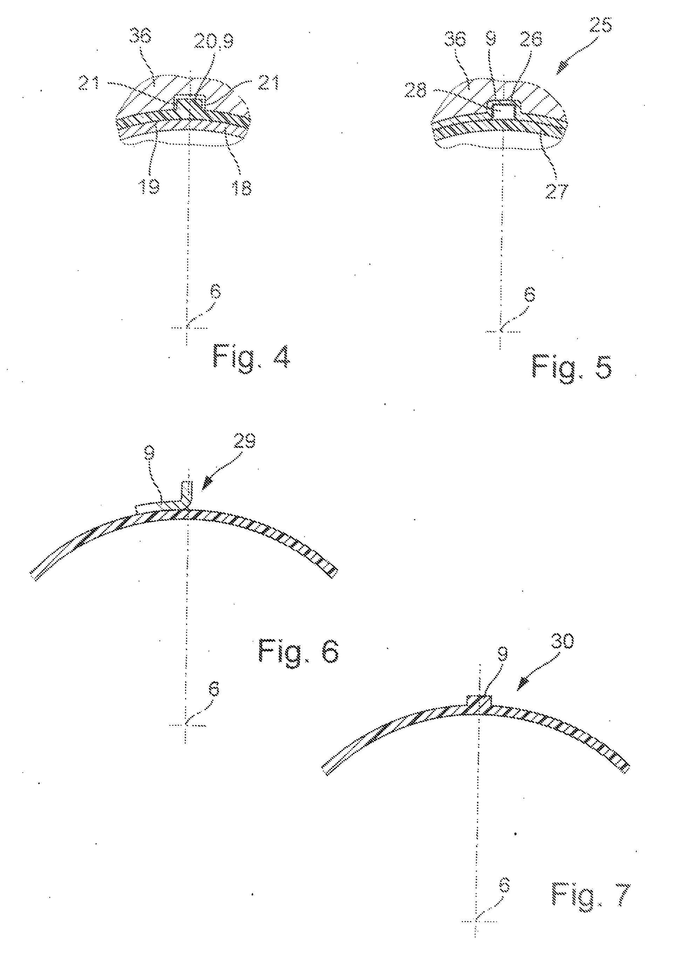

Figur 4 zeigt ein Detail einer Führungshülse 18, die zweiteilig aus einem Metallrohr 19 und aus einer Kunststoffhülse 20 hergestellt ist. Die Kunststoffhülse 20 ist durch Umspritzen des Metallrohres 19 oder durch Aufpressen bzw. Aufschnappen auf das Metallrohr 19 auf dem Metallrohr 19 befestigt. Als Werkstoffe für das Metallrohr 19 sind Nichteisenmetalle oder Stahl und deren Legierungen vorgesehen. In diesem Fall weist die Führungshülse 18 radial hervorstehende Führungsvorsprünge 9 auf, die beispielsweise in Führungsnuten 8 eines entsprechendes Führungsrohrs 36 eingreifen. Die Kunststoffhülse 20 weist die Führungsvorsprünge 9 mit den parallelen Führungsflanken 21 auf. Die Führungshülse 18 ist über die Führungsvorsprünge 9 in einem entsprechend mit Führungsnuten versehenen Führungsrohr 36 geführt.

Figur 5 zeigt ein Detail einer Führungshülse 25, die als ein Profil 26 aus Metall im Verbund mit einer Hülse 27 aus Kunststoff zusammengesetzt ist. Das rohrförmige Profil 26 ist beispielsweise ein Präzisionsziehteil und weist radiale Ausformungen 28 auf, die örtlich als einzelne Führungsvorsprünge 9 oder als sich über die gesamte Länge erstreckende Führungsvorsprünge 9 aus dem Blech des Profils 26 geformt sind. Das Profil 26 und die Hülse 27 sind durch Spritzen, Vulkanisieren, Kleben, Aufpressen und Einschnappen miteinander verbunden. Die Führungshülse 25 ist über die Führungsvorsprünge 9 außen beispielsweise in den Führungsnuten 8 eines Führungsrohrs 36 geführt. Es ist auch denkbar eine Führungshülse einzusetzen, die ausschließlich nur durch das Profil 26 ohne weiter Hülse aus Kunststoff gebildet ist.

Figur 6 zeigt ein Detail eines Führungsrohrs 29, bei dem die Führungsvorsprünge 9 einzeln als winkelförmige Einzelteile aus Kunststoff oder aus Blech auf einer hohlzylindrischen Hülse aus Metall oder aus Kunststoff aufgesetzt und auf dieser durch Kleben, Schweißen, Nieten, Löten oder ähnliches befestigt sind. Das Führungsrohr 29 ist über die Führungsvorsprünge 9 außen beispielsweise in den Führungsnuten 8 einer Führungshülse 5a geführt.

Figur 7 zeigt ein Detail einer Führungshülse 30 die einteilig mit den Führungsvorsprüngen 9 aus Kunststoff oder aus Metall, wie Nichteisenmetall und deren Legierungen, geformt ist. Die Führungshülse 30 ist über die Führungsvorsprünge 9 außen beispielsweise in den Führungsnuten 8 eines Führungsrohrs 7 geführt.

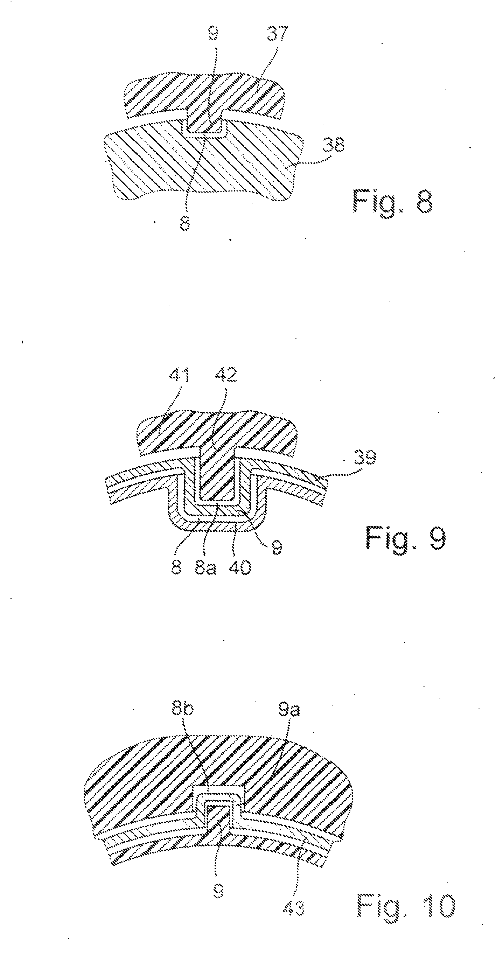

Figur 8 zeigt ein Detail einer Führungshülse 37 aus Kunststoff. Mit der Führungshülse 37 ist wenigstens einer der Führungsvorsprünge 9 einteilig ausgebildet. Die Führungsvorsprünge 9 stehen von der Führungshülse 37 aus radial nach innen hervor und greifen in eine Führungsnut 8 an einem massiv aus Kunststoff oder Metall gebildeten Führungsrohr 38 ein.

Figur 9 zeigt ein Detail eines Führungsrohrs 39 aus Blech. In das Blech des Führungsrohrs 39 ist wenigstens einer der Führungsvorsprünge 9 eingeformt. Die Führungsvorsprünge 9 stehen von dem Führungsrohr 39radial nach innen ab und greifen in eine radial nach außen öffnende Führungsnut 8 in einer Führungshülse 40 ein. Die Führungshülse 40 ist einteilig mit der Führungsnut 8 kalt aus Blech geformt.

Die äußere Führungshülse ist bei Anwendungen in Ausrücksystemen für Parallelschaltgetrieben mit einem Führungsvorsprung versehen, welcher nach innen gerichtet in die Führungsnut 8a eingreift.

Figur 10 zeigt ein Detail eines Führungsrohrs 43 aus Blech. Das Profil des Führungsrohrs 43 weist radial nach außen weisende Führungsvorsprünge 9a auf. Die Führungsvorsprünge greifen in die Führungsnuten 8b ein. Die innere Führungshülse weist nach außen weisende Führungsvorsprünge 9b auf, die in die Innenkontur der Führungsvorsprünge 9a eingreifen.

### Bezugszeichen

- 1: Ausrücklagersystem
- 2: Ausrücklager
- 3: Ausrücklager
- 4: Außenring
- 5: Führungshülse
- 5a: Führungshülse
- 6: Längsmittelachse
- 7: Führungsrohr
- 8, 8a, 8b: Führungsnut
- 9, 9a, 9b: Führungsvorsprung
- 10: Lasche
- 11: Längsrippe
- 12: Steg
- 13: Innenflanken
- 14: Außenumfangslinie
- 15: Führungsrohr
- 16: Flanke
- 17: Flanke
- 18: Führungshülse
- 19: Metallrohr
- 20: Kunststoffhülse
- 21: Führungsflanke
- 22: Führungsfläche
- 23: Führungsflanke
- 24: Fläche
- 25: Führungshülse
- 26: Profil
- 27: Hülse
- 28: Ausformungen
- 29: Führungsrohr
- 30: Führungshülse
- 31: Stützelement
- 32: Längsführung
- 33: Wälzkörper
- 34: Innenring
- 35: Stirnseite
- 36: Führungsrohr
- 37: Führungshülse
- 38: Führungsrohr
- 39: Führungsrohr
- 40: Führungshülse
- 41: Führungshülse
- 42: Führungsvorsprung
- 43: Führungsrohr

## Patentansprüche

1. Ausrücklagersystem (1) mit wenigstens einem Ausrücklager (2, 3), mit zumindest einer Führungshülse (5a, 18, 25, 30, 37, 40, 41) und mit mindestens einem ortsfesten Führungsrohr (7, 15, 29, 38, 39, 43), wobei die längsverschiebbare Führungshülse (5a, 18, 25, 30, 37, 40, 41) an dem Führungsrohr (7, 15, 29, 38, 39, 43) entlang der Längsmittelachse (6) des Ausrücklagersystems (1) geführt ist und dabei an einem durch die Führungshülse (5a, 25, 30, 37, 40, 41) verschiebbaren Lagerring (4) des Ausrücklagers (2) so anliegt, dass das Ausrücklager (2) mittels des Lagerringes (4) axial beweglich ist, wobei das Ausrücklagersystem (1) wenigstens eine Längsführung (32) zwischen der Führungshülse (5a, 18, 25, 30, 37, 40, 41) und dem Führungsrohr (7, 15, 29, 38, 39, 43) aus zumindest einer längs gerichtet verlaufenden und deshalb zu der Längsmittelachse (6) parallel ausgerichteten Führungsnut (8) und aus einem radial die Führungsnut (8) eingreifenden Führungsvorsprung (9) aufweist, wobei der Führungsvorsprung (9) in der Führungsnut (8) und die Führungsnut (8) relativ zueinander axial verschiebbar sind, **dadurch gekennzeichnet, dass** das Führungsrohr (7, 15, 29, 38, 39, 43) über Flanken (16,17,21,23) des Führungsvorsprungs (9) führbar ist.

2. Ausrücklagersystem nach Anspruch 1, **dadurch gekennzeichnet, dass** der Führungsvorsprung (9) radial nach außen absteht und in eine radial nach innen geöffnete Führungsnut (8) eingreift.

3. Ausrücklagersystem nach Anspruch 1, **dadurch gekennzeichnet, dass** der Führungsvorsprung (9) radial nach innen gerichtet absteht und in eine radial nach außen offene Führungsnut (8) eingreift.

4. Ausrücklagersystem nach Anspruch 1, **dadurch gekennzeichnet, dass** die Führungsnut (8) an der Führungshülse (5a, 40) ausgebildet ist und dass das Führungsrohr (7, 39, 43) den Führungsvorsprung (9) aufweist.

5. Ausrücklagersystem nach Anspruch 4, **dadurch gekennzeichnet, dass** Führungsrohr (7, 39) und der Führungsvorsprung (9) einteilig miteinander ausgebildet sind.

6. Ausrücklagersystem nach Anspruch 4, **dadurch gekennzeichnet, dass** der Führungsvorsprung (9) an dem Führungsrohr (15) befestigt ist.

7. Ausrücklagersystem nach Anspruch 1, **dadurch gekennzeichnet, dass** die Führungsnut (8) an dem Führungsrohr (36, 38) ausgebildet ist und dass die Führungshülse (18, 25, 30, 37) den Führungsvorsprung (9) aufweist.

8. Ausrücklagersystem nach Anspruch 7, **dadurch gekennzeichnet, dass** die Führungshülse (30, 37) und der Führungsvorsprung (9) einteilig ausgebildet miteinander ausgebildet sind.

9. Ausrücklagersystem nach Anspruch 6, **dadurch gekennzeichnet, dass** der Führungsvorsprung (9) an der Führungshülse (18, 25) befestigt ist.

10. Ausrücklagersystem nach Anspruch 1, **dadurch gekennzeichnet, dass** die Längsführung (32) wenigstens drei der Führungsnuten (8) und wenigsten drei der Führungsvorsprünge (9) aufweist, wobei jeweils einer der Führungsvorsprünge (9) mit jeweils einer Führungsnut (8) korrespondiert.

11. Ausrücklagersystem nach Anspruch 1, **dadurch gekennzeichnet, dass** die Führungshülse (5a, 18, 25, 30, 37, 40) und das Führungsrohr (7, 15, 29, 38, 39) konzentrisch ineinander zu einem Schiebesitz angeordnet sind, wobei zwischen dem Führungsrohr (7, 15, 29, 38, 39) und der Führungshülse (5a, 18, 25, 30, 37, 40) ein Radialspiel ausgebildet ist, welches größer ist als ein tangential gerichtetes Führungsspiel in der Längsführung (32) zwischen der Führungsnut (8) und dem Führungsvorsprung (9).

## Claims

1. Release bearing system (1) having at least one release bearing (2, 3), having at least one guide sleeve (5a, 18, 25, 30, 37, 40, 41) and having at least one positionally fixed guide tube (7, 15, 29, 38, 39, 43), with the longitudinally movable guide sleeve (5a, 18, 25, 30, 37, 40, 41) being guided on the guide tube (7, 15, 29, 38, 39, 43) along the longitudinal central axis (6) of the release bearing system (1), and here, bearing against a bearing ring (4), which can be moved by the guide sleeve (5a, 25, 30, 37, 40, 41), of the release bearing (2) in such a way that the release bearing (2) can be moved axially by means of the bearing ring (4), with the release bearing system (1) having at least one longitudinal guide (32) between the guide sleeve (5a, 18, 25, 30, 37, 40, 41) and the guide tube (7, 15, 29, 38, 39, 43), composed of at least one longitudinally running guide groove (8), which is therefore aligned parallel to the longitudinal central axis (6), and a guide projection (9) which engages radially into the guide groove (8), with the guide projection (9) in the guide groove (8) and the guide groove (8) being axially movable relative to one another, **characterized in that** the guide tube (7, 15, 29, 38, 39, 43) can be guided by means of flanks (16, 17, 21, 23) of the guide projection (9).

2. Release bearing system according to Claim 1, **characterized in that** the guide projection (9) projects radially outward and engages into a radially inwardly open guide groove (8).

3. Release bearing system according to Claim 1, **characterized in that** the guide projection (9) projects radially inward and engages into a radially outwardly open guide groove (8).

4. Release bearing system according to Claim 1, **characterized in that** the guide groove (8) is formed on the guide sleeve (5a, 40) and **in that** the guide tube (7, 39, 43) has the guide projection (9).

5. Release bearing system according to Claim 4, **characterized in that** the guide tube (7, 39) and the guide projection (9) are formed in one piece with one another.

6. Release bearing system according to Claim 4, **characterized in that** the guide projection (9) is fastened to the guide tube (15).

7. Release bearing system according to Claim 1, **characterized in that** the guide groove (8) is formed on the guide tube (36, 38) and **in that** the guide sleeve (18, 25, 30, 37) has the guide projection (9).

8. Release bearing system according to Claim 7, **characterized in that** the guide sleeve (30, 37) and the guide projection (9) are formed in one piece with one another.

9. Release bearing system according to Claim 6, **characterized in that** the guide projection (9) is fastened to the guide sleeve (18, 25).

10. Release bearing system according to Claim 1, **characterized in that** the longitudinal guide (32) has at least three of the guide grooves (8) and at least three of the guide projections (9), with in each case one of the guide projections (9) corresponding to in each case one guide groove (8).

11. Release bearing system according to Claim 1, **characterized in that** the guide sleeve (5a, 18, 25, 30, 37, 40) and the guide tube (7, 15, 29, 38, 39) are arranged concentrically one inside the other to form a sliding fit, with radial play being provided between the guide tube (7, 15, 29, 38, 39) and the guide sleeve (5a, 18, 25, 30, 37, 40), which radial play is greater than a tangential guide play in the longitudinal guide (32) between the guide groove (8) and the guide projection (9).

## Revendications

1. Système de palier de débrayage (1), comprenant au moins un palier de débrayage (2, 3) avec au moins une douille de guidage (5a, 18, 25, 30, 37, 40, 41) et avec au moins un tube de guidage fixe (7, 15, 29, 38, 39, 43), la douille de guidage (5a, 18, 25, 30, 37, 40, 41) déplaçable en longueur étant guidée sur le tube de guidage (7, 15, 29, 38, 39, 43) le long de l'axe médian longitudinal (6) du système de palier de débrayage (1) et s'appliquant ainsi sur une bague de palier (4) du palier de débrayage (2) déplaçable par la douille de guidage (5a, 25, 30, 37, 40, 41) de telle sorte que le palier de débrayage (2) soit déplaçable axialement au moyen de la bague de palier (4), le système de palier de débrayage (1) présentant au moins une coulisse longitudinale (32) entre la douille de guidage (5a, 18, 25, 30, 37, 40, 41) et le tube de guidage (7, 15, 29, 38, 39, 43), constituée d'au moins une rainure de guidage (8) s'étendant en longueur et donc orientée parallèlement à l'axe médian longitudinal (6) et d'une saillie de guidage (9) venant en prise radialement dans la rainure de guidage (8), la saillie de guidage (9) dans la rainure de guidage (8) et la rainure de guidage (8) pouvant être déplacées axialement l'une par rapport à l'autre, **caractérisé en ce que** le tube de guidage (7, 15, 29, 38, 39, 43) peut être guidé par le biais de flancs (16, 17, 21, 23) de la saillie de guidage (9).

2. Système de palier de débrayage selon la revendication 1, **caractérisé en ce que** la saillie de guidage (9) dépasse radialement vers l'extérieur et vient en prise dans une rainure de guidage (8) ouverte radialement vers l'intérieur.

3. Système de palier de débrayage selon la revendication 1, **caractérisé en ce que** la saillie de guidage (9) dépasse radialement vers l'intérieur et vient en prise dans une rainure de guidage (8) ouverte radialement vers l'extérieur.

4. Système de palier de débrayage selon la revendication 1, **caractérisé en ce que** la rainure de guidage (8) est réalisée sur la douille de guidage (5a, 40) et **en ce que** le tube de guidage (7, 39, 43) présente la saillie de guidage (9).

5. Système de palier de débrayage selon la revendication 4, **caractérisé en ce que** le tube de guidage (7, 39) et la saillie de guidage (9) sont réalisés ensemble d'une seule pièce.

6. Système de palier de débrayage selon la revendication 4, **caractérisé en ce que** la saillie de guidage (9) est fixée sur le tube de guidage (15).

7. Système de palier de débrayage selon la revendication 1, **caractérisé en ce que** la rainure de guidage (8) est réalisée sur le tube de guidage (36, 38) et **en ce que** la douille de guidage (18, 25, 30, 37) présente la saillie de guidage (9).

8. Système de palier de débrayage selon la revendication 7, **caractérisé en ce que** la douille de guidage (30, 37) et la saillie de guidage (9) sont réalisées ensemble d'une seule pièce.

9. Système de palier de débrayage selon la revendication 6, **caractérisé en ce que** la saillie de guidage (9) est fixée sur la douille de guidage (18, 25).

10. Système de palier de débrayage selon la revendication 1, **caractérisé en ce que** la coulisse longitudinale (32) présente au moins trois des rainures de guidage (8) et au moins trois des saillies de guidage (9), l'une des saillies de guidage (9) correspondant à chaque fois à une rainure de guidage respective (8).

11. Système de palier de débrayage selon la revendication 1, **caractérisé en ce que** la douille de guidage (5a, 18, 25, 30, 37, 40) et le tube de guidage (7, 15, 29, 38, 39) sont disposés concentriquement l'un dans l'autre pour former un siège coulissant, un jeu radial étant réalisé entre le tube de guidage (7, 15, 29, 38, 39) et la douille de guidage (5a, 18, 25, 30, 37, 40), lequel est plus grand qu'un jeu de guidage orienté tangentiellement dans la coulisse longitudinale (32) entre la rainure de guidage (8) et la saillie de guidage (9).
